# EUROPÄISCHE PATENTSCHRIFT

(11) **EP 1 623 134 B1**
(45) Veröffentlichungstag und Bekanntmachung des Hinweises auf die Patenterteilung: **07.12.2016**
(21) Anmeldenummer: 04730844.0
(22) Anmeldetag: 03.05.2004
(51) Int. Cl.: F16D 65/12, F16D 65/02

(54) **BREMSSCHEIBE MIT KERAMISCHEM REIBRING**
BRAKE DISK COMPRISING A CERAMIC FRICTION RING
DISQUE DE FREIN A BAGUE DE FRICTION EN CERAMIQUE

(30) Priorität: 14.05.2003 DE 10321797
(43) Veröffentlichungstag der Anmeldung: 08.02.2006
(73) Patentinhaber: Freni Brembo S.p.A., 24035 Curno (Bergamo) (IT)
(72) Erfinder: SCHLITZ, Helmut, 71157 Hildrizhausen (DE); RIEDEL, Hans-Georg, 75177 Pforzheim (DE); SPANGEMACHER, Björn, 71065 Sindelfingen (DE); MAUCH, Gerhard, 70327 Stuttgart (DE)
(74) Vertreter: Mozzi, Matteo
(86) Internationale Anmeldenummer: PCT/EP2004/004653
(87) Internationale Veröffentlichungsnummer: WO 2004/102026

(56) Entgegenhaltungen:
- EP-A- 1 260 728
- EP-B1- 1 298 342
- DE-A- 2 201 885
- DE-A- 3 432 501
- DE-C1- 19 711 829
- FR-A- 1 486 577

## Beschreibung

Die Erfindung betrifft eine Bremsscheibe nach dem Oberbegriff des Anspruchs 1.

Aus der DE 297 10 533 U1 ist eine Bremsscheibe bekannt, die einen keramischen Reibring umfasst und mit einem Verbindungsflansch verbunden ist. Der Reibring besteht hierbei aus einem sogenannten Ceramic Matrix Composit. Der Reibring weist im Innenbereich einen Befestigungsring auf, der mit Befestigungsbohrungen versehen ist und über die Befestigungsbohrungen mit Befestigungsschrauben mit einem Verbindungsflansch verschraubt ist. Während des Betriebes der Bremsscheibe heizt sich der Reibring in einem Reibbereich auf. Der Befestigungsring im inneren Teil des Reibringes, der mit dem Verbindungsflansch verbunden ist, bleibt hingegen relativ kühl. Es treten somit zwischen dem Befestigungsring und dem Reibbereich Temperaturschwankungen auf, die im Extremfall mehrere 100° C betragen können. Diese Temperaturgradienten führen zu thermischen Spannungen, die sich mit bestehenden mechanischen Spannungen überlagern. Spannungssimulationen haben ergeben, dass insbesondere im Bereich des Befestigungsringes und dort im Bereich der Bohrungen Spannungsspitzen auftreten können.

Die Aufgabe der Erfindung besteht darin, die auftretenden thermischen und mechanischen Spannungen im Reibring gegenüber dem im Stand der Technik zu minimieren. DE3432501A und EP1298342B1 offenbaren Bremsscheiben und Verfahren zu deren Herstellung, die einen nächsten Stand der Technik für die Erfindung bilden.

Die Lösung der Aufgabe besteht in einem Verfahren zur Herstellung einer Bremsscheibe nach Anspruch 1.

Die erfindungsgemäss hergestellte Bremsscheibe umfasst einen keramischen Reibring und einen Verbindungsflansch. Der Verbindungsflansch ist konzentrisch zum Reibring angeordnet. Der Reibring weist in einem Innenbereich einen Befestigungsring auf, der mit Befestigungsbohrungen versehen ist. Über geeignete Befestigungsmittel, wie beispielsweise einer Verschraubung, ist der Befestigungsring mit dem Verbindungsflansch verbunden. Die Erfindung zeichnet sich dadurch aus, dass im Befestigungsring Entlastungsschlitze vorgesehen sind, die radial von einem Innenbereich des Befestigungsrings bis in einen Reibbereich des Reibrings verlaufen und an ihrem äußeren Ende mit Entlastungsbohrungen versehen sind.

Die Entlastungsschlitze bewirken, dass thermische Spannungen, die durch die bereits erwähnten Temperaturgradienten auftreten, im Bereich des Befestigungsringes des Reibringes abgebaut werden. Im Bereich des Befestigungsringes treten somit im Wesentlichen nur noch mechanische Belastungen auf, die durch die Torsionskräfte der Bremswirkung hervorgerufen werden. Das keramische Material des Reibrings ist für derartige mechanische Belastungen ausgelegt. Die thermischen Belastungen, die durch die unterschiedlichen Ausdehnungen der unterschiedlichen Reibringbereiche hervorgerufen werden, werden durch die erfindungsgemässe Massnahme minimiert, was zur deutlichen Reduzierung von Spannungsspitzen im Bereich der Bohrungen des Befestigungsringes führt.

Zur Vermeidung von Kerbwirkungen, die durch die Entlastungsschlitze im Reibring hervorgerufen werden könnten, sind erfindungsgemäß die Entlastungsschlitze an ihrem äußeren Ende (bzgl. ihres radialen Verlaufes) mit Entlastungsbohrungen versehen.

Die Länge der Entlastungsschlitze beträgt in der Regel zwischen 2 mm und 30 mm. Die Länge hängt von der Bauweise des Reibringes und von der Breite des Befestigungsringes ab. Bevorzugt werden die Entlastungsschlitze vom inneren Ende des Befestigungsringes bis zum Reibbereich durchgezogen. Die Entlastungsschlitze sind somit in der Regel genauso lang wie der Befestigungsring breit ist und sie weisen bevorzugt eine Länge zwischen 10 mm und 20 mm auf.

Die Anzahl der Entlastungsschlitze beträgt bevorzugt zwischen 3 und 20, wobei diese in der Regel äquidistant angeordnet sind. Die Anzahl ist ebenfalls ab hängig von der Bauweise des Reibrings und des Befestigungsrings sowie vom Durchmesser des Reibrings, eine hohe Anzahl von Entlastungsschlitzen bewirkt einen besonders guten Abbau von thermischen Spannungen. Durch die Vielzahl der Unterbrechungen wird jedoch das Material um die Befestigungsbohrungen geschwächt. Dies führt wiederum zu einer Verminderung der mechanischen Belastbarkeit im Bereich der Befestigungsbohrungen. Es hat sich deshalb herausgestellt, dass eine besonders bevorzugte Anzahl von Entlastungsschlitzen zwischen 10 und 14 beträgt.

Aus Gründen der Geräuschreduzierung beim Bremsvorgang kann es bei speziellen Bauweisen des. Reibrings ebenfalls zweckmäßig sein, dass die Anzahl der Entlastungsschlitze sechs beträgt.

Erfindungsgemäß ist das Material für den keramischen Reibring eine kohlenstofffaserverstärkte Siliziumkarbid-Keramik. Ein derartiges keramisches Material weist eine hohe Festigkeit auf, wobei durch die Kohlenstofffaserverstärkung eine hohe Schadenstoleranz gewährleistet ist.

Vorteilhafte Ausgestaltungsformen der Erfindung sind im folgenden Beispiel näher erläutert.

Dabei zeigen:
- Fig. 1: eine Draufsicht auf eine erfindungsgemäße Bremsscheibe mit einem Reibring und einem Verbindungsflansch,
- Fig. 2: eine dreidimensionale Darstellung eines erfindungsgemäßen Reibringes in teilweiser Schnittdarstellung.

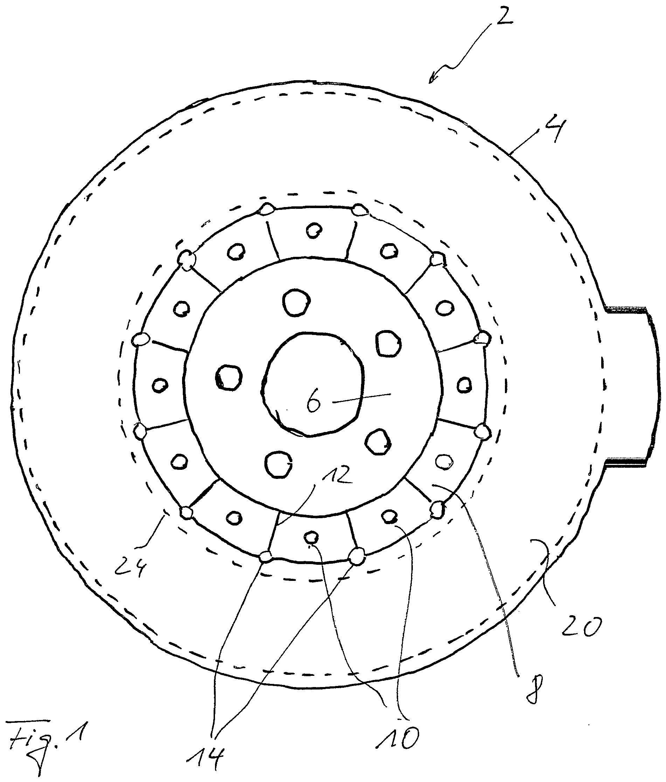

In Figur 1 ist eine Bremsscheibe 2 dargestellt, die einen keramischen Reibring 4 und einen Verbindungsflansch 6 umfasst. Der Reibring 4 weist in einem Innenbereich einen Befestigungsring 8 auf. Der Befestigungsring 8 ist mit Befestigungsbohrungen 10 und Entlastungsschlitzen 12 versehen. Die Entlastungsschlitze 12 verlaufen von einem inneren Bereich des Reibringes 4 radial durch den Befestigungsring 8 zu einem Reibbereich 20 des Reibrings 4. Der Reibbereich 20 ist durch gestrichelte Linien im Reibring dargestellt. In diesem Bereich verlaufen hier nicht dargestellte Bremsbeläge während des Bremsvorgangs. Der Reibbereich 20 ist der Bereich im Reibring, der den höchsten thermischen Belastungen ausgesetzt ist. Die Entlastungsschlitze 12 sind so ausgelegt, dass sie bis in den Reibbereich (20) hineinreichen (nicht gezeigt in den Figuren).

Wie in Figur 1 dargestellt ist, enden die Entlastungsschlitze 12 in Entlastungsbohrungen 14. Die Entlastungsbohrungen 14 sind dafür vorgesehen, dass evtl. auftretende mechanische Spannungsspitzen an den Enden der Entlastungsschlitze 12 abgebaut werden und Kerbspannungen verhindert werden. Die Entlastungsbohrungen 14 haben üblicherweise einen Durchmesser zwischen 1 mm und 7 mm.

In Figur 1 ist weiterhin ein Verbindungsflansch 6 dargestellt, der im Bereich des Befestigungsringes 8 mit dem Reibring 4 durch Verschraubung verbunden ist. Die Verschraubung ist in Figur 1 nicht näher dargestellt. Der Verbindungsflansch besteht üblicherweise aus einer Aluminiumlegierung oder aus Stahl. Die Verwendung dieser Metalle hängt von denen im Verwendungsfall der Bremsscheibe 2 auftretenden Temperaturen ab.

Der Verbindungsflansch 6 ist in Figur 1 als zusätzliches Bauteil dargestellt, das an einer Radnabe eines Fahrzeuges angeschraubt werden kann. Der Verbindungsflansch 6 kann jedoch ebenso gut durch die Radnabe des Fahrzeugs an sich gebildet werden. In dieser Ausgestaltungsform wird der Reibring 4 direkt an der Radnabe des Fahrzeuges befestigt.

Durch die Verwendung eines Verbindungsflansches 6 auf Aluminiumbasis kann ein Gewichtsvorteil der Bremsscheibe 2, der bereits durch das niedrige spezifische Gewicht des Reibringes 4 besteht, noch erheblich verbessert werden. In der Ausgestaltungsform in Figur 1 weist der Reibring 4 zwölf äquidistante Entlastungsschlitze 12 auf. Die gestrichelte Linie 24 markiert die innere Abgrenzung des Reibbereichs 20, die gerade noch von einem hier nicht dargestellten Reibbelag überstrichen wird. Grundsätzlich ist es möglich, die Entlastungsschlitze 12 bis zu der Linie 24 radial nach außen zu ziehen.

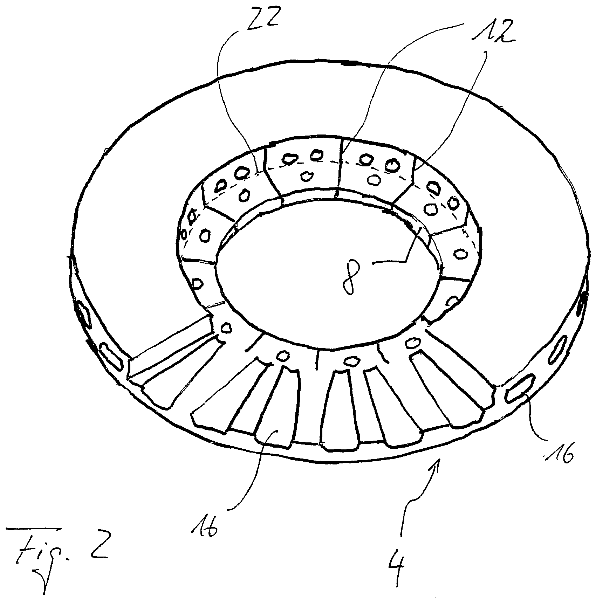

In Figur 2 ist eine perspektivische Darstellung des erfindungsgemäßen Reibrings 4 dargestellt. Der Reibring 4 in Figur 2 weist zudem Kühlbohrungen 16 auf, die im vorderen Teil der Zeichnung durch eine Schnittdarstellung besser veranschaulicht sind. In Figur 2 ist zudem zu erkennen, dass der Befestigungsring 8 und der Reibring 4 unterschiedliche Dicken aufweisen. Zwischen dem Befestigungsring 8 und dem Reibring 4 ist somit eine Stufe 22 vorhanden. Erfindungsgemäß werden die Entlastungsschlitze 12 soweit radial nach außen gezogen, dass die Stufe 22 überschritten wird und die Schlitze 12 bis in den Reibbereich 20 hineinreichen.

Der Befestigungsring 8, der einen integralen Bestandteil des gesamten Reibrings 4 bildet und somit auch aus demselben Material wie der Reibring 4 besteht, weist üblicherweise eine Dicke zwischen 5 mm und 40 mm auf, in einer bevorzugten Ausgestaltungsform beträgt die Dicke des Befestigungsrings 8 12 mm. Eine radiale Ausdehnung des Befestigungsrings 8 liegt zwischen 10 mm und 40 mm, üblicherweise beträgt die radiale Ausdehnung des Befestigungsrings 8 25 mm. Die Dicke des Reibring 4 im Reibbereich 20 beträgt je nach Auslegung der Kühlbohrungen 16 zwischen 20 mm und 40 mm. Der Durchmesser der Bremsscheibe 2 beträgt zwischen 250 mm und 400 mm.

Zur Herstellung eines erfindungemäßen keramischen Reibringes 4 wird eine Mischung aus Harz und Kohlenstofffasern in eine Pressform gegeben, gepresst und nachträglich unter Temperatureinwirkung ausgehärtet. Nach dem Aushärten erhält man einen kohlenstofffaserverstärkten Kunststoff (CFK). Der CFK-Körper wird anschließend unter Luftausschluss zu einem kohlenstofffaserverstärkten Kohlenstoff karbonisiert. Der kohlenstofffaserverstärkte Kohlenstoff (CC) wird im Folgenden Preform genannt. Die Bearbeitung des Reibringes erfolgt im Zustand der Preform. In diesen Zustand werden auch die Entlastungsschlitze 12 und die Entlastungsbohrungen 14 eingebracht. Es ist jedoch auch möglich, die Entlastungsschlitze 12 / Entlastungsbohrungen 14 durch eine entsprechende Pressform mit in den CFK-Körper einzupressen.

Die bearbeitete Preform wird anschließend unter Luftausschluss bei ca. 1600 °C mit Silizium infiltriert. Bei dieser Infiltration reagiert das flüssige Silizium mit dem Kohlenstoff der Preform zu Siliziumkarbid. Nach dem Abkühlen erhält man eine Siliziumkarbidkeramik, die mit Kohlenstofffasern verstärkt ist und gegebenenfalls restliches Silizium enthält.

Die Ausgestaltung der Bremsscheibe 2, insbesondere des Reibrings 4 könnte auch auf andere keramische Materialien als Reibmaterialien angewendet werden. Alternative nicht beanspruchte Materialien, die zur Anwendung für Bremsen geeignet sind, sind beispielsweise Metall-Matrix-Composits (MMC) oder intermetallische Composits (IMC).

## Patentansprüche

1. Verfahren zur Herstellung einer Bremsscheibe mit keramischem Reibring (4) aus einer kohlenstofffaserverstärkten Siliziumkarbid-Keramik mit Siliziumresten und einem Verbindungsflansch (6),
wobei der Verbindungsflansch (6) konzentrisch zum Reibring (4) angeordnet ist und der Reibring (4) in einem Innenbereich einen Befestigungsring (8) mit Befestigungsbohrungen (10) aufweist und an den Befestigungsbohrungen (10) mit dem Verbindungsflansch (6) durch Befestigungsmittel verbunden ist,
und wobei der Befestigungsring (8) und der Reibring (4) unterschiedliche Dicken aufweisen, so dass zwischen dem Befestigungsring (8) und dem Reibring (4) eine Stufe (22) vorhanden ist,
und wobei der Reibring (4) im Befestigungsring (8) zwischen den Befestigungsbohrungen (10) Entlastungsschlitze (12) aufweist, die radial von einem Innenbereich des Befestigungsrings (8) in Richtung eines Reibbereichs (20) des Reibrings (4) verlaufen,
und wobei die Entlastungsschlitze (12) an ihrem äußeren Ende mit Entlastungsbohrungen (14) versehen sind,
wobei die Herstellung des keramischen Reibrings die folgenden Schritte umfasst:
- Verpressen und nachträglich Härten unter Temperatureinwirkung einer Mischung aus Harz und Kohlenstofffasern unter Bildung eines CFK-Körpers nach dem Aushärten,
- Karbonisieren des CFK-Körpers unter Luftabschluss unter Bildung einer Preform aus Kohlenstofffaserverstärktem Kohlenstoff,
- wobei das Einbringen von Entlastungsschlitzen (12) und Entlastungsbohrungen (14) in die Preform erfolgt oder die Entlastungsschlitze und Entlastungsbohrungen (14) mit einer entsprechenden Pressform in den CFK-Körper eingepresst werden,
wobei die Entlastungsschlitze (12) soweit radial nach außen gezogen werden, dass die Stufe (22) überschritten wird und die Entlastungsschlitze (12) bis in den Reibbereich (20) hineinreichen,
- anschließend Infiltration der Preform unter Luftabschluss mit Silizium bei ca. 1600 °C unter Bildung des keramischen Reibrings (4) nach dem Abkühlen.

2. Verfahren nach Anspruch 1,
**dadurch gekennzeichnet,**
**dass** in die Preform die Entlastungsschlitze (12) mit eine Länge von 2 mm bis 20 mm eingebracht werden.

3. Verfahren nach Anspruch 2,
**dadurch gekennzeichnet,**
**dass** in die Preform die Entlastungsschlitze (12) mit eine Länge von 10 mm bis 20 mm eingebracht werden.

4. Verfahren nach einem der vorhergehende Ansprüche,
**dadurch gekennzeichnet,**
**dass** zwischen 3 und 20 Entlastungsschlitze (12) eingebracht werden.

5. Verfahren nach Anspruch 4,
**dadurch gekennzeichnet,**
**dass** zwischen 10 und 14 Entlastungsschlitze (12) eingebracht werden.

## Claims

1. Method for producing a brake disk having a ceramic friction ring (4) of carbon fiber reinforced silicon carbide ceramic with remainders of silicon and a connection flange (6),
wherein the connection flange (6) is located concentrically to the friction ring (4), and the friction ring (4) provides, in an inner region thereof, a mounting ring (8) with mounting bores (10), and is connected, at the mounting bores (10), with the connection flange (6) by mounting means,
and wherein the mounting ring (8) and the friction ring (4) have different thicknesses, so that a step (22) is present between the mounting ring (8) and the friction ring (4),
and wherein, in the mounting ring (8) between the mounting bores (10), the friction ring (4) comprises relieve slits (12) which extend radially from an inner region of the mounting ring (8) in the direction of a friction region (20) of the friction ring (4),
and wherein outer ends of the relieve slits (12) are provided with relieve bores (14),
wherein the production of the ceramic friction ring comprises the following steps:
- pressing and thereafter hardening a mixture of resin and carbon fibers, by applying temperature, to form a CFRP body after hardening,
- carbonizing the CFRP body under exclusion of air to form a preform from carbon fiber reinforced carbon,
wherein the relieve slits (12) and the relieve bores (14) are made in the preform, or the relieve slits and the relieve bores (14) are pressed into the CFRP body by a corresponding press mold,
wherein the relieve slits (12) are extended radially outward so far that the step (22) is crossed and the relieve slits (12) extend into the friction region (20),
- thereafter, infiltrating the preform under the exclusion of air with silicon at approximately 1600° C to form the ceramic friction ring (4) after cooling.

2. Method according to claim 1, **characterized in that** the relieve slits (12) having a length from 2 mm to 20 mm are made in the preform.

3. Method according to claim 2, **characterized in that** the relieve slits (12) having a length from 10 mm to 20 mm are made in the preform.

4. Method according to any of the preceding claims, **characterized in that** between 3 and 20 relieve slits (12) are made.

5. Method according to claim 4, **characterized in that** between 10 and 14 relieve slits (12) are made.

## Revendications

1. Procédé de fabrication d'un disque de frein à bague de friction en céramique (4) en une céramique de carbure de silicium renforcée de fibres de carbone avec des restes de silicium et une bride de liaison (6),
la bride de liaison (6) étant disposée de manière concentrique par rapport à la bague de friction (4) et la bague de friction (4) comprenant dans une zone intérieure une bague de fixation (8) avec des perçages de fixation (10) et étant fixée à la bride de liaison (6), aux perçages de fixation (10), par des moyens de fixation,
et la bague de fixation (8) et la bague de friction (4) présentant des épaisseurs différentes, si bien qu'il y a un étagement (22) entre la bague de fixation (8) et la bague de friction (4),
et la bague de friction (4) comprenant dans la bague de fixation (8), entre les perçages de fixation (10), des fentes de décharge (12) qui s'étendent radialement à partir d'une zone intérieure de la bague de fixation (8) en direction d"une zone de friction (20) de la bague de friction (4),
et les fentes de décharge (12) étant pourvues à leur extrémité extérieure de perçages de décharge (14),
la fabrication de la bague de friction céramique comprenant les étapes suivantes :
compresser et ultérieurement durcir sous l'effet de température, d'un mélange de résine et de fibres de carbone en formant un corps CFK,
après le durcissement
carboniser le corps CFK à l'abri de l'air en formant une préforme en carbone renforcé de fibres de carbone,
la formation de fentes de décharge (12) et de perçages de décharge (14) étant effectuée dans la préforme ou les fentes de décharge et les perçages de décharge (14) étant pressés dans le corps CFK par une forme de pressage correspondante,
les fentes de décharge (12) étant tirées radialement vers l'extérieur, si bien que l'étagement (22) est dépassé et les fentes de décharge (12) s'étendant jusque dans la zone de friction (20),
ensuite infiltrer la préforme, à l'abri de l'air, à environ 1600 °C, avec du silicium en formant, après refroidissement, la bague de friction céramique (4).

2. Procédé selon la revendication 1, **caractérisé en ce que** les fentes de décharge (12) sont formées dans la préforme avec une longueur de 2 mm à 20 mm.

3. Procédé selon la revendication 2, **caractérisé en ce que** les fentes de décharge (12) sont formées dans la préforme avec une longueur de 10 mm à 20 mm.

4. Procédé selon l'une des revendications précédentes, **caractérisé en ce qu'**il est formé entre 3 et 20 fentes de décharge (12).

5. Procédé selon la revendication 4, **caractérisé en ce qu'**il est formé entre 10 et 14 fentes de décharge (12).
